**Europäisches Patentamt**

**European Patent Office**

**Office européen des brevets**

(19)

(11) Veröffentlichungsnummer : **0 358 729 B1**

(12) **EUROPÄISCHE PATENTSCHRIFT**

(45) Veröffentlichungstag der Patentschrift :
**19.11.92 Patentblatt 92/47**

(51) Int. Cl.⁵ : $B60C\ 25/138$, $F03C\ 1/04$

(21) Anmeldenummer : **89900606.8**

(22) Anmeldetag : **22.12.88**

(86) Internationale Anmeldenummer :
**PCT/EP88/01193**

(87) Internationale Veröffentlichungsnummer :
**WO 89/06604 27.07.89 Gazette 89/16**

(54) **REIFENMONTIERVORRICHTUNG.**

(30) Priorität : **14.01.88 DE 8800372 U**

(43) Veröffentlichungstag der Anmeldung :
**21.03.90 Patentblatt 90/12**

(45) Bekanntmachung des Hinweises auf die
Patenterteilung :
**19.11.92 Patentblatt 92/47**

(84) Benannte Vertragsstaaten :
**AT CH DE FR GB LI**

(56) Entgegenhaltungen :
**EP-A- 0 001 855**
**EP-A- 0 223 656**
**US-A- 3 086 578**
**US-A- 4 047 553**

(73) Patentinhaber : **STAHLGRUBER Otto Gruber
GmbH & Co.
Einsteinstrasse 130
W-8000 München 80 (DE)**

(72) Erfinder : **Der Erfinder hat auf seine Nennung
verzichtet**

(74) Vertreter : **Patentanwälte Beetz sen. - Beetz
jun. Timpe - Siegfried - Schmitt-Fumian- Mayr
Steinsdorfstrasse 10
W-8000 München 22 (DE)**

## Beschreibung

Die Erfindung betrifft eine Vorrichtung zum Montieren und Demontieren eines Reifens auf eine bzw. von einer Radfelge der im Oberbegriff des Patentanspruchs 1 angegebenen Gattung.

Aus der US-A-3 086 578 ist eine derartige Montiervorrichtung für die Luftreifen von Kraftfahrzeugen bekannt, bei welcher auf einem kastenförmigen Sockel im vorderen Teil eine Tragsäule mit einem Auflageteller und Arretiermitteln zur Auflage und Fixierung einer Radfelge angeordnet ist. Im hinteren Teil dieses Sockels ist ein Ständer befestigt, der Vertikalführungen und einen Verstellzylinder für zwei horizontal vorstehende Arme besitzt. Am freien Vorderende jedes Armes ist eine profilierte Abdrückrolle montiert. Durch Betätigen des Verstellantriebs werden die beiden Abdrückrollen an den Bereich der Wulstränder eines zuvor auf dem Ständer arretierten Fahrzeugrades herangeführt und in das Bett der Radfelge hineingedrückt. Ein im Sockel angeordneter Antriebsmotor bewirkt eine Verdrehung des auf dem Auflageteller arretierten Fahrzeugrads, so daß die gesamten beiden Wulstränder von den Felgenhörnern gelöst werden. Ferner weist diese Montiervorrichtung eine Einrichtung zum Überziehen der abgedrückten Wulstränder über das Felgenhorn auf, deren Aushebefinger mit einer im Ständer geführten zentralen Stange gekoppelt ist. Zwischen dem Antriebsmotor und der im Ständer gelagerten Drehhülse, die über die Arretiermitte mit der Radfelge fest verbunden wird, ist ein mehrstufiges Keilriemengetriebe vorgesehen.

Die Arretierung der Radfelge erfolgt einmal durch eine von Hand verdrehbare Mutter und zum anderen durch federbelastete Arretierbolzen, die an der Unterseite der Auflageplatte montiert sind.

Aus der US-A-4 047 553 ist eine ähnliche Montiereinrichtung bekannt, bei welcher ein oder zwei konische Abdrückrollen am Ende von zwei gegeneinander vertikal verstellbaren Armen angeordnet sind. Diese Arme sind mit ihren rückwärtigen Enden in einem vertikalen Ständer gegeneinander motorisch verstellbar geführt. Der Ständer befindet sich am hinteren Ende eines Sockels, der in seinem Vorderteil eine vertikale Tragsäule mit Halterungs- und Spannelementen für die Fixierung eines Fahrzeugrades trägt.

Bei den bekannten Montiervorrichtungen sind mehrere unterschiedliche Antriebsaggregate, wie Elektromotoren und pneumatische Kolbenzylindereinheiten, sowie ein Untersetzungsgetriebe zwischen dem Elektromotor und dem Auflageteller für das Fahrzeugrad erforderlich. Darüber hinaus können sich Probleme bei der manuell durchgeführten Arretierung der ggf. schweren Fahrzeugräder auf dem Auflageteller ergeben.

Aufgabe der Erfindung ist es, eine gattungsgemäße Vorrichtung zum Montieren und Demontieren von Kraftfahrzeug-Luftreifen zu schaffen, die bei verfachter Bedienung eine zuverlässige Arretierung auch schwerer Fahrzeugräder gewährleistet und mit Druckluft als einzigem Energieträger auskommt.

Diese Aufgabe wird durch die Merkmale des Patentanspruchs 1 gelöst.

Die Ausbildung der Arretierelemente für die Radfelge in Form von mehreren Spreizarmen gewährleistet eine verdrehsichere Fixierung bei gleichzeitiger genauer Zentrierung der Radfelge auf dem Auflageteller der Säule. Durch die Kopplung des Antriebsmotors einmal mit dem Drehteller und zum anderen mit den Spreizarmen wird erreicht, daß nach dem Auflegen eines Fahrzeugrades auf den Teller durch Starten des Motors in einer ersten Phase die Arretierung und Zentrierung der Radfelge erfolgt und in einer automatisch sich anschließenden zweiten Phase die arretierte Radfelge in Drehung versetzt wird, um durch eine anschließende Zustellbewegung der beiden Arme der Abdrückeinrichtung die Radwülste vollständig vom Felgenhorn zu lösen. Dabei erfordern der pneumatische Radialkolbenmotor und auch die Stellzylinder der Abdrückeinrichtung lediglich Druckluft als einzigem Energieträger. Von dem langsam drehenden pneumatischen Motor können hohe Drehmomente bei geringen Abmessungen aufgebracht werden, so daß auch schwere Luftreifen bzw. LKW-Räder montiert werden können. Durch die Anordnung von Reibungskupplungen im Antriebszug vom pneumatischen Motor zur drehbaren Tragsäule bzw. zu den Spreizarmen wird eine Überlastsicherung und ein automatischer Übergang zwischen der Spreizphase der Arme und der Verdrehphase des aufgespannten Fahrzeugrades erzielt.

Gemäß einer bevorzugten Ausführung der Erfindung sind am Ständer der Abdrückeinrichtung zwei Querarme an Lagerbuchsen um die Mittelachse des Ständers verdrehbar befestigt. Zwischen diesen horizontal starren Armen und den die Abdrückrollen tragenden Schwenkhebeln sind Kolbenzylindereinheiten angeordnet, durch deren Betätigung die Schwenkhebel nach der Einstellung der Querarme eine Schwenkbewegung um ihre jeweilige Anlenkachse ausführen. Durch diese Ausgestaltung wird der Angriff der an den freien Enden der Schwenkhebel gelagerten Andrückrollen an den druckempfindlichen Seitenwandungen des jeweiligen Reifens verbessert.

Weitere zweckmäßige Ausgestaltungen der Erfindung sind Gegenstand der Unteransprüche.

Im folgenden wird ein Ausführungsbeispiel der Erfindung anhand der Zeichnung näher erläutert. Es zeigen:

Fig. 1: eine Montiervorrichtung für einen Luftreifen auf eine bzw. von einer Kfz-Felge in Seitenansicht,

Fig. 2 die Vorrichtung nach Fig. 1 in Draufsicht,

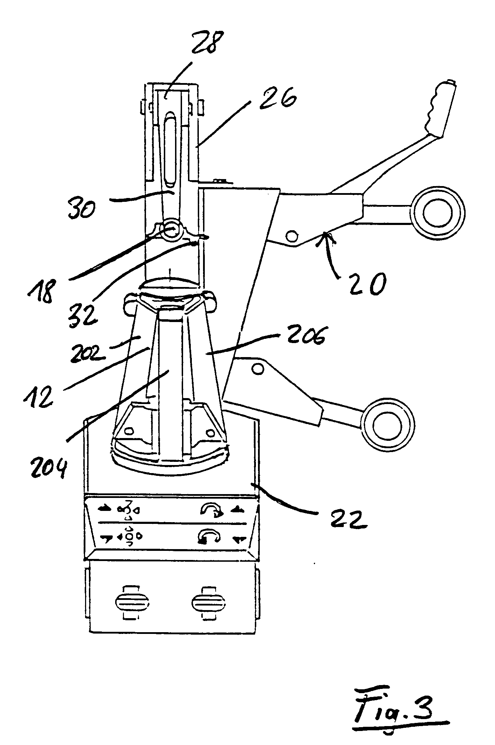

Fig. 3 die Vorrichtung nach Fig. 2 in Vorderansicht

Fig. 4 einen Längsschnitt durch einen pneumatischen Motor,

Fig. 5 einen Schnitt längs der Linie V-V von Fig. 4,

Fig. 6 eine Ansicht auf die Oberseite eines Zylinderblocks,

Fig. 7 eine Ansicht auf die Unterseite des Zylinderblocks nach Fig. 6,

Fig. 8 einen Schnitt längs der Linie VIII-VIII von Fig. 6,

Fig. 9 eine Draufsicht auf die obere Hälfte des Statorgehäuses,

Fig. 10 einen Schnitt längs der Linie X-X von Fig. 9 in vergrößertem Maßstab,

Fig. 11 einen Schnitt längs der Linie XI-XI von Fig. 9,

Fig. 12 eine Ansicht auf die Unterseite der oberen Hälfte des Statorgehäuses nach Fig. 9,

Fig. 13 einen Schnitt durch eine Steuereinheit,

Fig. 14 eine Ansicht gemäß Pfeil XIV von Fig. 13,

Fig. 15 eine Ansicht gemäß Pfeil XV von Fig. 13,

Fig. 16 eine Einrichtung zum Festlegen einer Radfelge in Seitenansicht, teilweise geschnitten,

Fig. 17 eine Einrichtung zum Abdrücken eines Reifens von einer Radfelge in Seitenansicht, und

Fig.18 die Einrichtung nach Fig. 17 in Draufsicht.

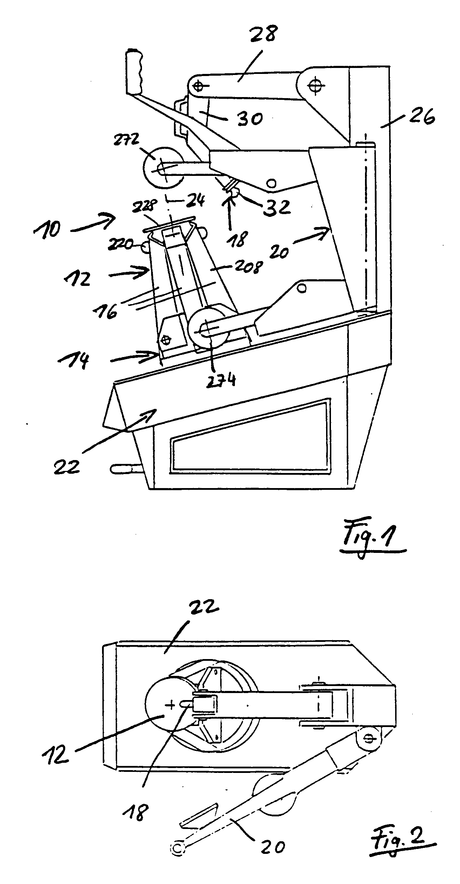

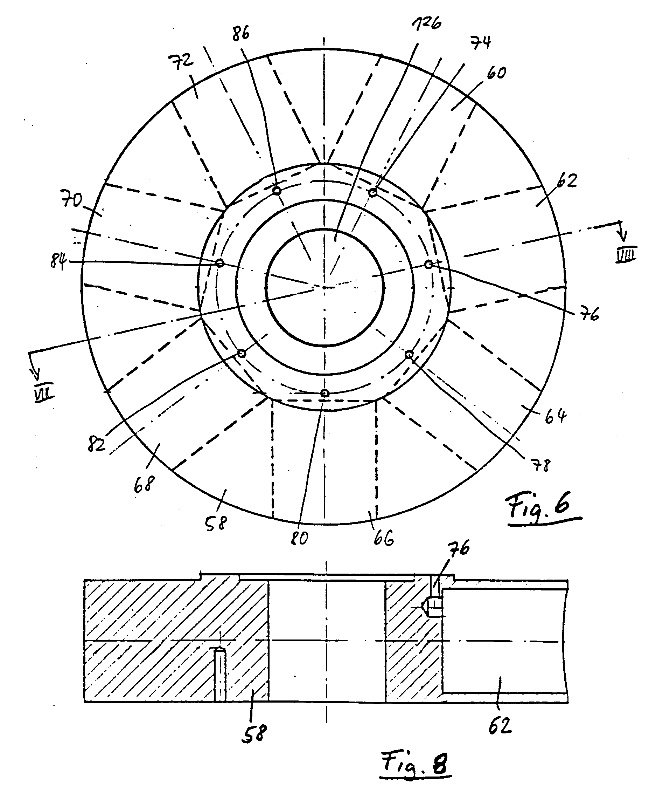

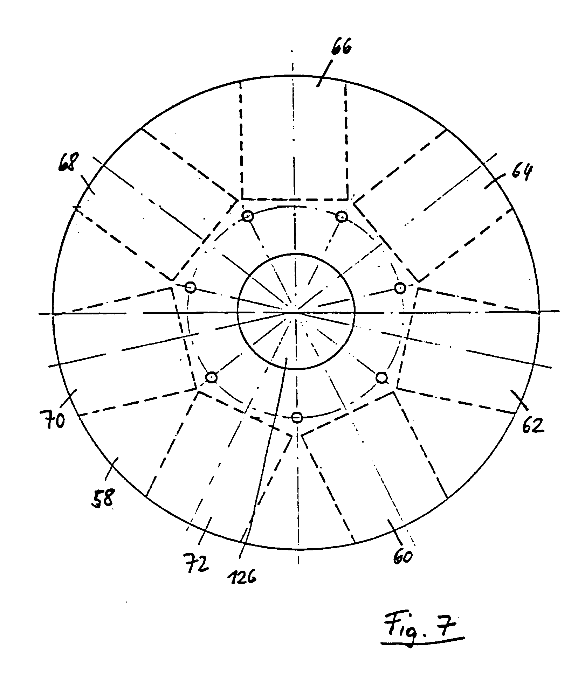

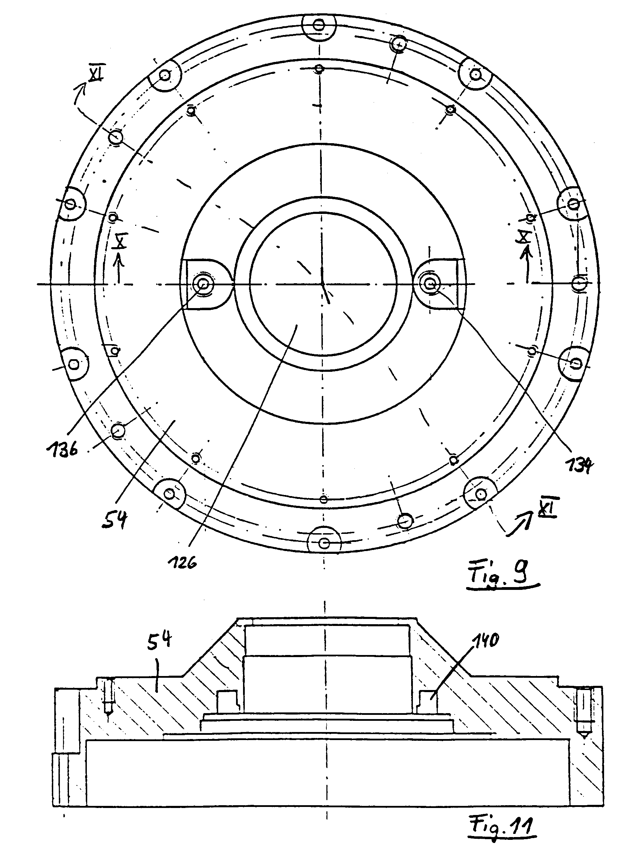

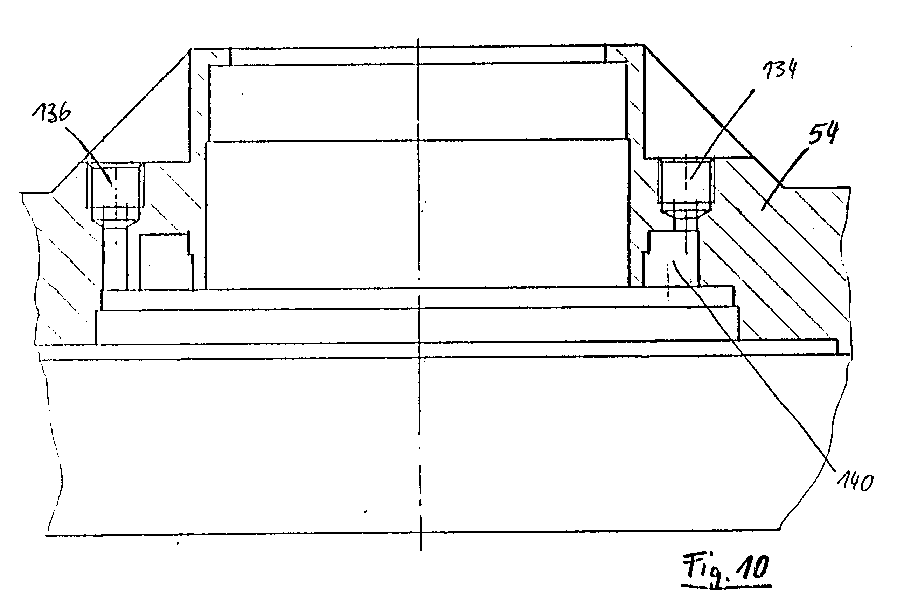

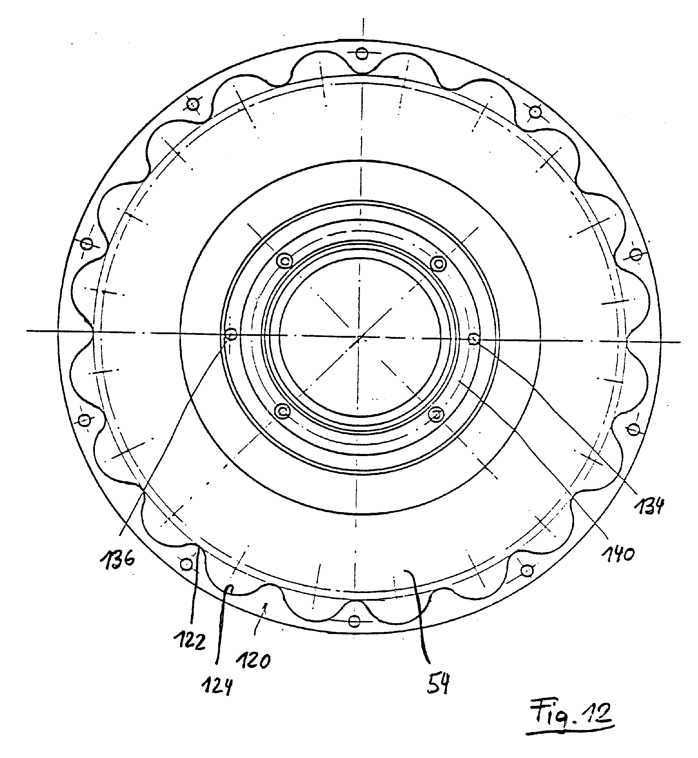

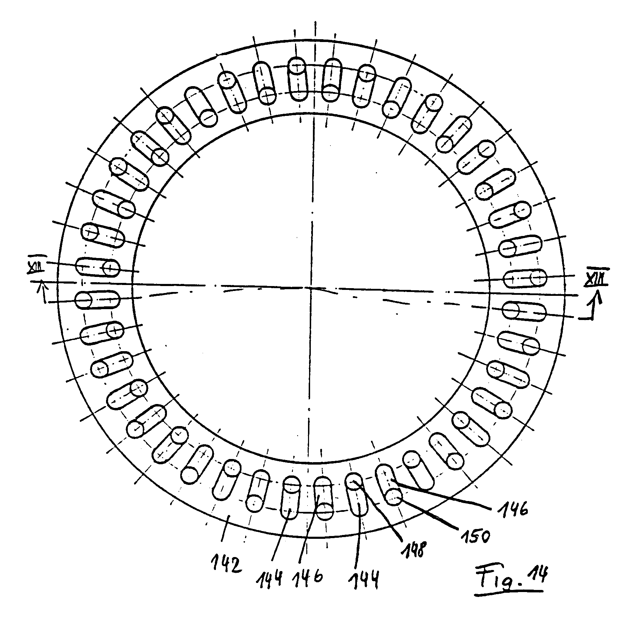

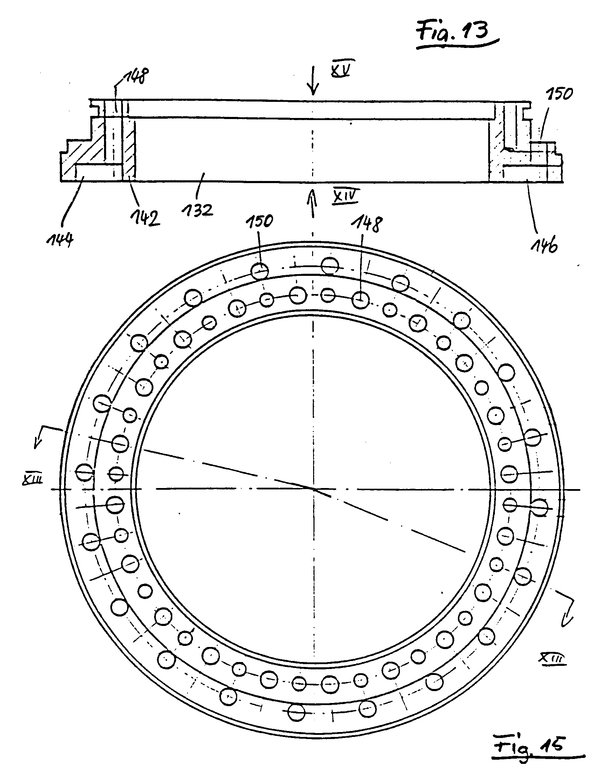

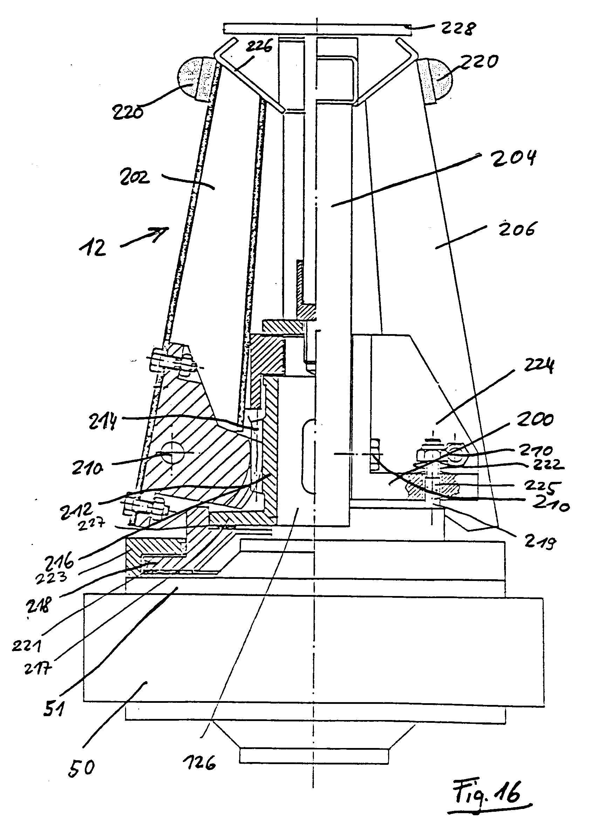

Fig. 1 zeigt eine Vorrichtung 10 zur Montage und Demontage eines Reifens auf eine bzw. von einer Felge in Seitenansicht. Die Vorrichtung 10 weist eine Einrichtung 12 zum Festlegen oder Aufspannen einer Radfelge auf, die über einen Motor 14 angetrieben wird. Durch den Motor 14 erfolgt darüberhinaus ein Verschwenken von Armen 16 der Aufspanneinrichtung 12. Ferner ist eine Einrichtung 18 zum Abziehen bzw. Aufziehen der Wulstränder des Reifens von der bzw. auf die Felge vorgesehen. Mittels einer Einrichtung 20 erfolgt ein Abdrücken der Wulstränder des Reifens in das Felgenbett. Die Einrichtungen 12, 14, 18 und 20 sind auf einem Rahmen 22 angeordnet. Wie aus Fig. 1 zu ersehen ist, ist die Einrichtung 12 mit ihrer Mittelachse 24 geneigt gegenüber der Vertikalen angeordnet, was die Handhabung der Vorrichtung erleichtert. Der Motor 14 zum Antrieb der Aufspanneinrichtung 12 ist ein pneumatischer Motor, der anhand der Fig. 4 bis 15 näher erläutert wird. Die Einrichtung 20 zum Abdrücken der Wulstränder eines Reifens in ein Felgenbett wird anhand der Fig. 17 und 18 näher beschrieben.

Auf dem Rahmen 22 ist eine Säule 26 befestigt, die an ihrem oberen Ende einen in der gezeigten Stellung waagrechten Arm 28 aufweist. An dem Arm 28 ist ein verschwenkbarer Arm 30 gelagert, der an seinem unteren freien Ende ein Element 32 zum Abziehen der Wulstränder von einer Radfelge aufweist. Das Element 32, das vorzugsweise aus Kunststoff besteht, stützt sich auf dem Felgenhorn einer Radfelge auf und schiebt entweder den Wulstrand über das Felgenhorn nach innen in das Felgenbett oder zieht einen Wulstrand aus dem Felgenbett über das Felgenhorn nach außen, um einen Reifen von einen Radfelge zu demontieren. Da sich das Element 32 auf dem Felgenhorn abstützt, kann der Arm 30 relativ frei beweglich ausgebildet sein.

Fig. 4 zeigt einen Längsschnitt durch einen pneumatischen Motor 50. Der pneumatische Motor 50 besteht aus einem Statorgehäuse 52 mit zwei Gehäusehälften 54, 56. Innerhalb des Statorgehäuses 52 ist ein Rotor 58 angeordnet. Der Rotor 58 bildet einen Zylinderblock, in welchem sieben Zylinderbohrungen 60, 62, 64, 66, 68, 70 und 72 radial gleichmäßig in dem Zylinderblock 58 verteilt ausgebildet sind. Jedem Zylinder 60 bis 72 ist eine Druckluftzu- bzw. abfuhrleitung 74, 76, 78, 80, 82, 84, 86 zugeordnet. Die Öffnungen der Leitungen 74 bis 86 liegen auf einem Kreis 88. In jedem Zylinder 60 bis 72 ist ein Kolben 90 bis 102 verschiebbar geführt. Die Abdichtung der Kolben 90 bis 102 erfolgt über Ringdichtungen 104. Am radial äußeren Ende der Kolben 90 bis 102 sind Rollen 106, 108, 110, 112, 114, 116, 118 drehbar gelagert. Die Rollen 106 bis 118 laufen auf einem Nockenkranz 120, der im Inneren des Statorgehäuses 52 ausgebildet ist. Der Nockenkranz 120 weist zwanzig Nockenberge 122 und zwanzig Nockentäler 124 auf. Koaxial an dem Zylinderblock 58 ist eine Abtriebswelle 126 befestigt, die in dem Statorgehäuse 52 über Lager 128 und 130 gelagert ist. Die Oberseite des Zylinderblockes 58 gleitet an der Unterseite einer Steuereinrichtung 132, über welche eine frontale Ver- und Entsorgung der Zylinder 60 bis 72 mit Druckluft erfolgt. Die Steuereinrichtung 132 weist eine Druckluftzufuhrleitung 134 und eine Druckluftabfuhrleitung 136 auf. Wie nachstehend erläutert wird, können beide Leitungen umgekehrt werden, d.h. über die Leitung 136 kann Druckluft zugeleitet und über die Leitung 134 Druckluft abgeleitet werden, was mit einer Drehrichtungsumkehr des Rotors 58 verbunden ist. Wenn sowohl über die Leitung 134 als auch 136 Druckluft in die Steuereinrichtung 132 eingeleitet wird, werden sämtliche Kolben 90 bis 102 der Zylinder 60 bis 72 mit Druckluft versorgt und der Rotor wird in dem Stator blockiert, wodurch der pneumatische Motor 50 zum Stillstand gelangt und arretiert wird.

In der oberen Statorgehäusehälfte 54 ist eine Ringnut 140 ausgebildet, in welcher die Steuereinrichtung 132 eingesetzt ist. Nach Einsetzen der Steuereinrichtung 132 in die Ringnut 140 wird eine Ringnut 135, in welche eine Druckluftzuleitungsöffnung 134 mündet, und eine radial weiter außen liegende Ringnut 137 abgegrenzt, in welche eine Druckluftauslaßöffnung 136 mündet. Die Steuereinrichtung 132 besteht aus einem Ring 142, der an der auf der dem Zylinderblock 58 zugekehrten Seite mit Langlöchern 144 bzw. 146 ausgebildet ist. Von den Langlöchern 144 verlaufen radial innen senkrechte Durchgangskanäle 148 durch den Ring 142 nach oben. Von den Langlöchern 146 verlaufen Durchgangskanäle 150 am radial äußeren Ende nach oben durch den Ring. Über die Langlöcher 144 und die Durchgangskanäle 148 wird Druckluft den Zufuhrleitungen 106 bis 118 der Kolbenzylindereinheiten 60; 90 bis 72; 102 zugeführt, wenn diese mit den Durchgangsleitungen 148 in Verbindung stehen. Entsprechend wird Druckluft über die Durchgangsöffnung 150 und die Langlöcher 146 in die Ausgangsleitung 136 geleitet von den Kolbenzylindereinheiten, die mit den Durchgangsleitungen 150 in Verbindung stehen.

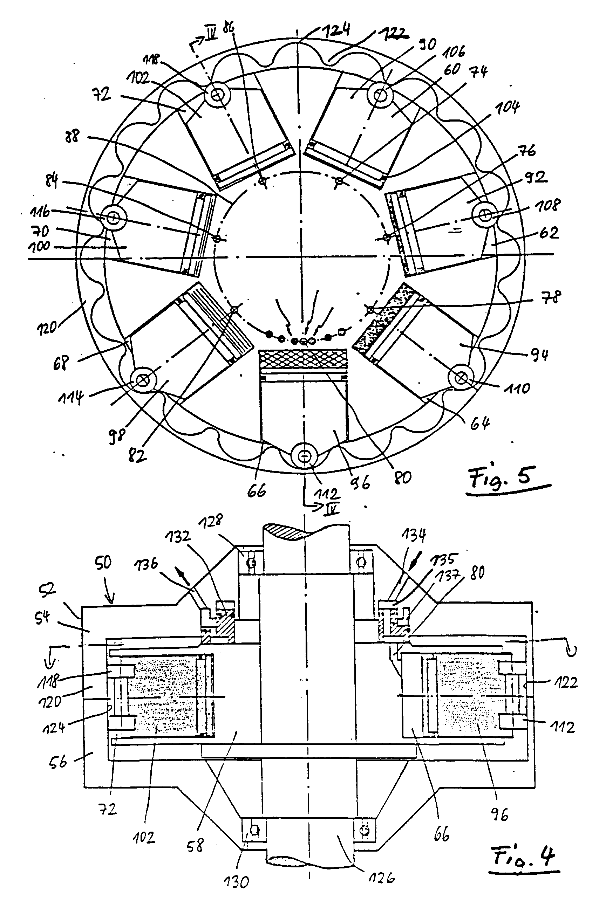

Während der Rotation des pneumatischen Motors 50 ist jede Kolbenzylindereinheit 60, 90 bis 72, 102 mit der entsprechenden Leitung 106 bis 118 abwechselnd über die frontale Versorgungseinrichtung 132 mit der Luftzufuhrleitung 134 oder der Luftauslaßleitung 136 verbunden. Aus Fig. 5 ist zu ersehen, daß die Kolben 60, 62, 64 mit Druckluft gespeist werden und ihre Rollen 106, 108, 110 an den Flanken der Nocken 122, 124 Druck ausüben, so daß der Rotor 58 entgegen Uhrzeigerrichtung an dem Nockenring 120 abläuft. Der Kolben 96 ist dagegen in seiner voll ausgefahrenen Stellung, d.h. die Rolle 112 befindet sich im Mittelpunkt eines Nockentales 124. Der Kolben 96 wird umgesteuert, d.h. die Druckluft aus dem Zylinder 66 wird abgelassen, so daß der Kolben 96 in den Zylinder geschoben wird und die Rolle 112 keinen Druck auf die Nockenflanke ausübt. Die Ausfuhr von Druckluft erfolgt ebenfalls in den Zylindern 68, 70 und 72, da die Rollen 14, 116, 118 der Kolben 98, 100, 102 auf Nockenflanken auflaufen und die Kolben in das Innere der Zylinder verschoben werden. Das von allen aktiven Kolben erzeugte Moment bewirkt einen Antrieb, der ausreicht, eine vollständige Drehung des Rotors 58 um 360° durchzuführen und in jeder Phase der Bewegung ein Drehmoment sicherzustellen, das ausreicht, einen Reifen während der Montage oder Demontage zu drehen. Die Kolben, die sich in der aktiven Phase befinden, d.h. deren Rollen unter Druck auf die in Drehrichtung des Rotors abfallenden Flanken der Nocken einwirken, werden über die Druckluftleitungen mit Druckluft versorgt, während Druckluft aus den anderen Zylindern abgeführt wird, wenn die Kolben radial nach innen verschoben werden.

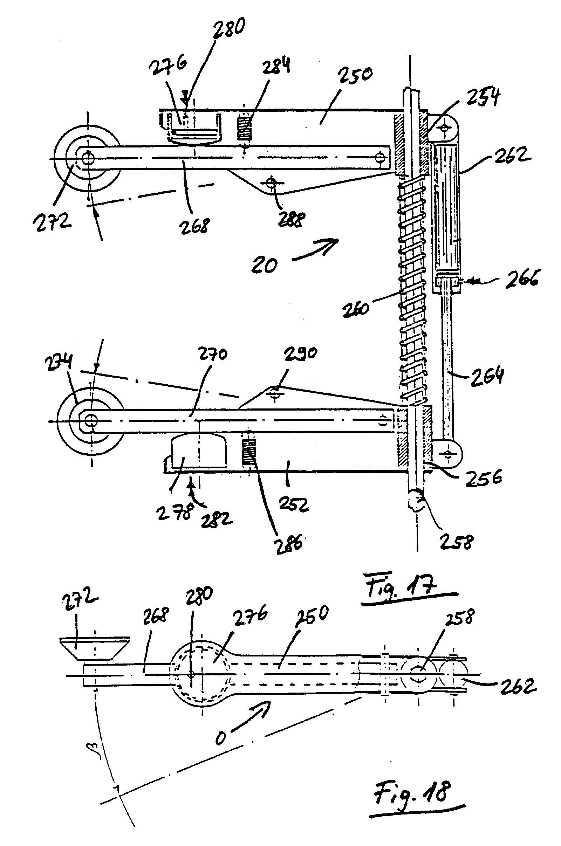

Fig. 16 zeigt eine Einrichtung 12 zum Aufspannen und Festlegen einer Radfelge. An einer Lagerplatte 200 sind vier Spreizarme 202, 204, 206 und 208 über Gelenke 210 gelagert. Jeder Spreizarm weist ein Zahnsegment 212 auf, das mit einem Gewinde 214 einer Schnecke 216 kämmt, die an der Abtriebswelle 126 des pneumatischen Motors 50 angeordnet ist. Die Zähne des Segmentes 212 des Spreizarms 202 sind um ein Viertel der Ganghöhe des Gewindes 214 der Schnecke 216 gegenüber den Zähnen des Spreizarmes 204 versetzt. Die Zähne des Segmentes des Spreizarmes 204 wiederum sind um eine Viertelganghöhe gegenüber den Zähnen des Segmentes an dem Spreizarm 206 und die wiederum um eine Viertelganghöhe des Gewindes 214 der Schnecke 216 gegenüber den Zähnen an dem Spreizarm 208 versetzt, wodurch gewährleistet ist, daß bei Rotation der Schnecke 216 jeder Spreizarm 202 bis 208 die gleiche Schwenkbewegung nach außen oder nach innen durchführt.

Eine Kupplungsscheibe 218 weist an der Unterseite einen Reibbelag 221 auf, über welchen Reibschluß mit dem Gehäuse 51 des pneumatischen Motors 50 bewirkt wird. Die Kopplung der Kupplungsscheibe 218 mit dem Gehäuse 51 erfolgt pneumatisch. Die Kupplungsscheibe 218 ist in einem an dem Gehäuse 51 angeordneten Gehäusering 223 geführt.

An der Oberseite der Kupplungsscheibe 218 sind Schrauben 219 angebracht, die durch Bohrungen 225 in der Lagerplatte 200 geführt sind. Auf der Oberseite der Lagerplatte 200 stützen sich Tellerfedern 222 ab, die um die Schrauben 219 angeordnet sind. Über die Schrauben 219 wird die Lagerplatte 200 stationär festgehalten, wenn die Kupplungsscheibe 218 über Reibschluß mit dem Gehäuse 51 gekoppelt ist. In dieser Stellung der Lagerplatte 200 können die Spreizarme 202 bis 208 über die mit der Abtriebswelle 126 des pneumatischen Motors 50 angetriebene Schnecke 216 verschwenkt werden.

Wenn durch Verschwenken der Spreizarme 202 bis 208 eine Radfelge aufgespannt worden ist, wird der pneumatische Druck auf die Kupplungsscheibe 218 beendet, so daß diese sich unter der Wirkung der Federn 222 anhebt und mit Ihrer Oberseite, an der ein Reibbelag 227 angeordnet ist, in Anlage mit der Unterseite eines Ringes 217 gelangt, der an der Schnecke 216 angeformt ist. Über die Schrauben 225 wird die Lagerplatte 200 mitgenommen, wenn sich die Kupplungsscheibe 218 zusammen mit der Schnecke 216 dreht, während die Spreizarme 202 bis 208 ihre eingestellte Lage beibehalten. Damit wird eine über die Spreizarme eingespannte Radfelge gedreht und die Montage oder Demontage eines Reifens auf bzw. von einer Radfelge kann durchgeführt werden.

Wenn die Montage beendet ist, wird der pneumatische Motor 50 durch Versorgung sowohl der Druckluftzuleitung als auch Ableitung mit Druckluft abgestoppt und angehalten und durch erneute Kupplung der Kupplungsscheibe 218 mit dem Gehäuse 51 des Motors 50 und umgekehrte Versorgung des Druckluftmotors 50 wird eine Linksdrehung der Schnecke 216 bewirkt, was mit einem Zusammenschwenken der Spreizarme 202 bis 208 verbunden ist, die wiederum die eingespannte Radfelge freigeben.

An der Oberseite der Spreizarme 202 bis 208 sind zusätzlich zu den elastischen Körpern 220 zum Einspannen einer Radfelge an der Felgenschüssel Einspannhaken 226 angeordnet, mittels welchen Radfelgen am Felgenhorn von außen ergriffen und durch Einschwenken der Spreizarme 202 bis 208 eingespannt werden können. Eine an der Oberseite der Einrichtung 12 angeordnete Auflageplatte 228 kann abgenommen werden, so daß auch Radfelgen mit vorstehendem Zentrierstutzen in der Einrichtung 12 festgelegt werden können.

Die Einrichtung 12 zum Festlegen der Radfelgen benötigt keine zusätzliche Krafteinheit wie Kolbenzylindereinheiten zum Betätigen von Spannbacken sondern wird über den pneumatischen Motor betätigt. Die Einrichtung 12 ist vorzugsweise gegenüber der Vertikalen geneigt angeordnet, so daß ein bequemes und ermüdungsfreies Arbeiten möglich ist.

Fig. 17 und 18 zeigen eine Einrichtung 20 zum Abdrücken von Wulsträndern eines Reifens in das Bett einer Felge. Die Abdrückeinrichtung 20 weist zwei Arme 250 und 252 auf, die über Buchsen 254 bzw. 256 an einer senkrecht angeordneten Säule 258 gelagert sind. Die Säule 258 ist vorzugsweise im Querschnitt sechseckig ausgebildet, so daß keine Verdrehung der Arme 250 und 252 an der Säule 258 erfolgen kann. Zwischen den Armen 250 und 252 ist auf der Säule 258 eine Schraubenfeder 250 angeordnet, über welche die Arme auseinander gedrückt werden. Um die Arme 250 und 252 zueinander hin ziehen zu können, ist ein Zylinder 262 an dem Arm 250 und ein Kolben 264 an dem Arm 252 angelenkt. Die Anlenkung der Kolbenzylindereinheit 262, 264 ist in kürzestem Abstand zu der Säule 258 vorgenommen, so daß während der Betätigung der Kolbenzylindereinheit 262, 264 keine Kippmomente auf die Buchsen 254, 256 auftreten. Der Zylinder 262 wird über eine Leitung 266 mit Druckluft versorgt, wodurch der Kolben 264 in den Zylinder 262 hinein geschoben und der Abstand der Arme 250, 252 verringert wird.

An dem Arm 250 ist ein Schwhenkebel 268 und an dem Arm 252 ein Schwenkhebel 270 angelenkt. Am vorderen freien Ende des Schwenkhebels 268 ist eine konische Rolle 272 und am vorderen Ende des Schwenkhebels 270 eine konische Rolle 274 gelagert. Die Rollen 272 und 274 werden zum Abdrücken des Reifens von einer Radfelge in unmittelbarer Nähe des Felgenhorns auf die Flanken des Reifens aufgesetzt. Die erforderliche axiale Abdrückkraft wird über Kolbenzylindereinheiten 276 bzw. 278, die an den Armen 250 bzw. 252 befestigt sind, auf die Schwenkhebel 268, 270 aufgebracht. Die erforderliche Druckluft wird über Leitungen 280 bzw. 282 in die Kolbenzylindereinheiten 276, 278 zugeführt. Eine Rückstellung der Schwenkhebel 268, 270 in ihre Ausgangslage nach einem Abdrückvorgang, wenn die Kolbenzylindereinheiten 276, 278 eingefahren sind, erfolgt über Zugfedern 284 bzw. 286. Die Kolbenzylindereinheiten 276 und 278 können unterschiedliche Wege und damit unterschiedliche Verschwenkungswinkel der Hebel 268, 270 durchführen, wodurch eine Anpassung an unterschiedlich breite Felgenschultern erfolgen kann. Anschläge 288 und 290 begrenzen die maximalen Schwenkwege der Schwenkhebel 268 bzw. 270.

Wie aus Fig. 18 zu ersehen ist, kann die Einrichtung zum Abdrücken eines Reifens von einer Radfelge mit der Säule 258 um einen Winkel β verschwenkt werden, so daß zum einen ein unbehindertes Auflegen eines zu montierenden Reifens erfolgen kann und zum anderen unterschiedliche Reifendurchmesser berücksichtigt werden können.

Die Arme 250 und 252 gleiten mit ihren Buchsen 254, 256 in vertikaler Richtung auf der Säule 258 betätigt über die Kolbenzylindereinheit 262, 264, um an die Breite des abzudrückenden Reifens eingestellt zu werden. Durch Verschwenken mit der Säule 258 wird gleichzeitig der Durchmesser berücksichtigt. Nach Annäherung an die Reifenflanken über die Kolbenzylindereinheit 262, 264 sitzen die konischen Rollen 272, 274 auf den Reifenflanken auf. Während der aufgespannte Reifen über den pneumatischen Motor in Rotation versetzt wird, wird Druck auf die Kolbenzylindereinheiten 276, 278 ausgeübt, wodurch das Abdrücken der Wulstränder von den Felgenschultern in das Felgenbett eingeleitet wird. Durch die Drehung des Reifens kann die erforderliche Kraft zum Abdrücken der Wulstränder stark verringert werden. Durch das Aufbringen des Abdrückdruckes auf die Rollen 272, 24 wird ein Moment erzeugt, das die Arme 250, 252 und damit die Buchsen 254, 256 in geringen Grenzen verschwenkt, wodurch eine Blockierung der Buchsen 254, 256 an der Säule 258 erreicht wird und die Arme auf der Säule blockiert sind. Wenn der Reifen abgedrückt ist, werden die Kolben der Kolbenzylindereinheiten 276, 278 eingefahren, wodurch die Arretierung der Buchsen 254, 256 an der Säule 258 aufgehoben wird und die Arme über die Kraft der Feder 260 auseinander gefahren werden, so daß die Einheit 20 nach außen geschwenkt werden und durch Einsatz der Abzieheinrichtung 18 der Reifen von der felge abgenommen werden kann.

**Patentansprüche**

1.   Vorrichtung zum Montieren und Demontieren eines Reifens auf eine bzw. von einer Radfelge, bestehend aus
     - einem ortsfesten sockelartigen Rahmen (22),
     - einer an der Vorderseite des Rahmens (22) angeordneten Einrichtung (12) zum Festlegen einer Radfelge, die eine im Rahmen (22) drehbar gelagerte Säule (126, 228) mit einer oberen Auflageplatte (228) und mit Arretierelementen (202 bis 208) zur Fixierung der Radfelge sowie einen im sockelartigen Rahmen (22) angeordneten Motor (14, 50) als Drehantrieb für die Säule (126, 228) aufweist,
     - einer Einrichtung (20) zum Abdrücken der Wulstränder eines aufliegenden Luftreifens in das Felgenbett, die einen an der Rückseite des sockelartigen Rahmens (22) angeordneten Ständer (26) mit zwei Schwenkhebeln (268, 270) enthält, welche am Ständer (26) gegeneinander motorisch verstellbar angelenkt sind und an ihren freien Enden je eine Rolle (272, 274) tragen, welche Rollen auf beide Wulste gleichzeitig wirken, und
- einer Einrichtung (18) zum Ziehen der abgedrückten Wulstränder über das Felgenhorn, die ein Element (32) zum Abstützen auf das Felgenhorn aufweist,
**dadurch gekennzeichnet ,**
daß die Arretierelemente für die Radfelge durch mehrere selbstzentrierende Spreizarme (202 bis 208) gebildet sind, die mit ihrem unteren Endteil um horizontale Achsen (210) verschwenkbar an einer Lagerplatte (200) angelenkt sind,
und
daß der den Drehantrieb für die Säule (126, 228) und für die Auflageplatte (228) bildende Antriebsmotor (50) ein umsteuerbarer pneumatischer Motor (50) mit einem Rotor (58) und einem Stator (52) sowie mit radial angeordneten Kolbenzylindereinheiten (60, 90; 62, 92; 64, 94; 66, 96; 68, 98; 70, 100; 72, 102) und auf einem Kreis angeordneten Nocken (122, 124) ist, der zum gemeinsamen Verschwenken der Spreizarme (202 bis 208) über eine Reibungskupplung (218, 221, 227) und ein Getriebe (212, 214) mit den Spreizarmen (202 bis 208) in Antriebsverbindung steht.

2. Vorrichtung nach Anspruch 1, dadurch gekennzeichnet, daß das Getriebe (212, 214) eine auf der Antriebswelle (126) des pneumatischen Motors (50) angeordnete Schnecke (216) aufweist, daß die Lagerplatte (200), an der die Spreizarme (202 bis 208) angelenkt sind, entweder mit der Abtriebswelle (126) oder mit dem Motorgehäuse (51) kuppelbar ist und daß die Schnecke (216) mit Zahnsegmenten (212) an den Anlenkenden der Spreizarme (202 bis 208) kämmt.

3. Vorrichtung nach Anspruch 1 oder 2, dadurch gekennzeichnet, daß vier paarweise diametral gegenüberliegende Spreizarme (202 bis 208) an der Lagerplatte (200) angelenkt sind.

4. Vorrichtung nach Anspruch 2 oder 3, dadurch gekennzeichnet, daß um die Abtriebswelle (126) des Motors (50) eine Kupplungsscheibe (218) angeordnet ist, die über einen unteren Reibbelag (221) mit dem Motorgehäuse (51) bzw. über einen oberen Reibbelag (227) mit der Abtriebswelle (126) kuppelbar ist und die an ihrer Oberseite Schrauben (219) aufweist, die verschiebbar in Durchgangsbohrungen (225) in der Lagerplatte (200) geführt sind.

5. Vorrichtung nach Anspruch 4,

dadurch gekennzeichnet, daß an den Schrauben (219) auf die Lagerplatte (200) wirkende Federn (222) angeordnet sind und daß an der Schnecke (216) ein Ring (217) angeformt ist, der eine Anlagefläche für die Kupplungsscheibe (218) bildet.

6. Vorrichtung nach einem der Ansprüche 2 bis 5, dadurch gekennzeichnet, daß die Verzahnungen (212) der Segmente um jeweils 1/4 der Ganghöhe der Schnecke (216) gegeneinander versetzt sind.

7. Vorrichtung nach einem der Ansprüche 2 bis 6, dadurch gekennzeichnet, daß die Betätigung der Kupplungsscheibe (218) zur Kupplung der Lagerplatte (200) mit dem Motorgehäuse (51) pneumatisch erfolgt.

8. Vorrichtung nach einem der Ansprüche 1 bis 7, dadurch gekennzeichnet, daß an den freien Enden der Spreizarme (202 bis 208) Gummielemente (220) und Spannklauen (226) angeordnet sind.

9. Vorrichtung nach einem der Ansprüche 1 bis 8, dadurch gekennzeichnet, daß die Mittelachse der Einrichtung (12) zum Festlegen der Radfelge gegenüber der Vertikalen nach vorne unter einem spitzen Winkel geneigt ist.

10. Vorrichtung nach einem der Ansprüche 1 bis 9, dadurch gekennzeichnet, daß am Ständer (26) der Einrichtung (20) zum Abdrücken der Wulstränder zwei Arme (250, 252) um die senkrechte Ständerachse verdrehbar gelagert sind und daß an den Armen (250, 252) auf die Schwenkhebel (268, 270) wirkende Kolbenzylindereinheiten (276, 278) angeordnet sind.

11. Vorrichtung nach einem der Ansprüche 1 bis 10, dadurch gekennzeichnet, daß die Einrichtung (18) zum Ziehen der abgedrückten Wulstränder über das Felgenhorn einen am Ständer (26) angelenkten Gelenkarm (28, 30) aufweist, an dessen freiem Ende das Element zum Abstützen auf das Felgenhorn befestigt ist, welches Element als ein zum Hintergreifen des Wulstrandes geformtes Kunststoffelement (32) ausgebildet ist.

## Claims

1. Apparatus for mounting a tyre on and/or removing it from a wheel rim, comprising
- a stationary plinth-like frame (22),

- a device (12) mounted on the front of the frame (22) for immobilising a wheel rim, this device having a column (126, 228) rotatably mounted in the frame (22) and provided with an upper support plate (228) and with locking means (202 to 208) for fixing the rim, and this device further having a motor (14, 50) mounted in the plinth-like frame (22) as a rotary drive for the column (126, 228),

- a device (20) for pushing off the beaded edges of a supported pneumatic tyre into the rim well, this device comprising an upright (26) which is mounted on the rear of the plinth-like frame (22) and which has two pivoted levers (268, 270), which are pivoted on the upright (26) in such a way as to be adjustable relative to one another by means of a motor and which bear on their free ends respective rollers (272, 274) acting simultaneously on both beads, and

- a device (18) for pulling the pushed-off beaded edges over the rim horn, this device having an element (32) to bear on the rim horn,

characterised in that

the locking elements for the wheel rim are formed by a plurality of self-centring spreader arms (202 to 208) which by means of their lower end portions are pivoted on a base plate (200) so as to be pivotable about horizontal axes (210), and

the drive motor (50) forming the rotary drive for the column (126, 228) and for the support plate (228) is a reversible pneumatic motor (50) with a rotor (58) and stator (52) and with radially disposed piston-cylinder units (60, 90; 62, 92; 64, 94; 66, 96; 68, 98; 70, 100; 72, 102) and cams (122, 124) arranged on a circle, the motor (50) being operatively connected to the spreader arms (202 to 208) by a friction clutch (218, 221, 227) and transmission (212, 214) for joint pivoting of the spreader arms (202 to 208).

2. Apparatus as claimed in claim 1, characterised in that the transmission (212, 214) comprises a worm (216) mounted on the drive shaft (126) for the pneumatic motor (50), the base plate (200) on which the spreader arms (202 to 208) are pivoted can be coupled either to the output shaft (126) or to the motor housing (51), and the worm (216) meshes with toothed segments (212) on the pivoted ends of the spreader arms (202 to 208).

3. Apparatus as claimed in claim 1 or 2, characterised in that four spreader arms (202 to 208) arranged In diametrically opposite pairs are pivoted on the base plate (200).

4. Apparatus as claimed in claim 2 or 3, characterised in that around the output shaft (126) of the motor (50) there is arranged a clutch plate (218) which can be coupled by way of a lower friction lining (221) to the motor housing (51) or by way of an upper friction lining (227) to the output shaft (126), and which has on its top screws (219) which are slidably guided in passages (225) in the base plate (200).

5. Apparatus as claimed in claim 4, characterised in that springs (222) acting on the base plate (200) are mounted on the screws (219), and a ring (217) is moulded on the worm (216) and forms a bearing surface for the clutch plate (218).

6. Apparatus as claimed in any of claims 2 to 5, characterized in that the sets of teeth (212) on the segments are respectively offset relative to one another by one-quarter of the pitch of the worm (216).

7. Apparatus as claimed in any of claims 2 to 6, characterised in that the operation of the clutch plate (218) to couple the base plate (200) to the motor housing (51) is performed pneumatically.

8. Apparatus as claimed in any of claims 1 to 7, characterised in that rubber elements (220) and clamping claws (226) are mounted on the free ends of the spreader arms (202 to 208).

9. Apparatus as claimed in any of claims 1 to 8, characterized in that the centre axis of the device (12) for immobilising the wheel rim is inclined forwards at an acute angle to the vertical.

10. Apparatus as claimed in any of claims 1 to 9, characterised in that on the upright (26) of the device (20) for pushing off the beaded edges two arms (250, 252) are mounted so as to be rotatable about the vertical axis of the upright, and piston-cylinder units (276, 278) acting on the pivoted levers (268, 270) are mounted on the arms (250, 252).

11. Apparatus as claimed in any of claims 1 to 10, characterised in that the device (18) for pulling the pushed-off beaded edges over the rim horn comprises an articulated arm (28, 30) which is pivoted on the upright (26), and on whose free end the element to bear on the rim horn is secured, which element is in the form of a synthetic plastics element (32) shaped to grip behind the beaded edge.

## Revendications

1. Appareil pour le montage d'un pneumatique sur une jante de roue et son démontage de la jante de roue, composé

   - d'un bâti (22) en position fixe, en forme de socle,
   - d'un dispositif (12) monté sur le côté avant du bâti (22) et destiné à fixer une jante de roue, ce dispositif comprenant une colonne (126, 228) montée tournante dans le bâti (22) et comportant un plateau de dépose supérieur (228) et des éléments de blocage (202 à 208) pour la fixation de la jante de roue, ainsi qu'un moteur (14, 50) disposé dans le bâti (22) en forme de socle et faisant office de dispositif d'entraînement en rotation pour la colonne (126, 228),
   - d'un dispositif (20) pour repousser dans la base de la jante, les rebords des talons d'un pneumatique déposé, qui comprend un montant (26) disposé sur le côté arrière du bâti (22) en forme de socle, et équipé de deux leviers pivotants (268, 270), qui sont articulés sur le montant (26) en étant déplaçables l'un vers l'autre de manière motorisée, et qui, à leurs extrémités libres, portent chacun un galet (272, 274), ces galets agissant simultanément sur les deux talons, et
   - d'un dispositif (18) pour tirer les rebords des talons repoussés au-dessus de la joue de la jante, ce dispositif comportant un élément (32) pour l'appui sur la joue de la jante, caractérisé

   en ce que les éléments de blocage pour la jante de roue sont constitués par plusieurs bras d'écartement (202 à 208) auto-centrants, qui, par leur partie d'extrémité inférieure, sont articulés de manière pivotante sur une plaque de palier (200), autour d'axes horizontaux (210), et en ce que le moteur d'entraînement (50) constituant le dispositif d'entraînement en rotation pour la colonne (126, 228) et pour le plateau de dépose (228), est un moteur pneumatique réversible (50) comportant un rotor (58) et un stator (52), ainsi que des unités à piston et cylindre (60, 90; 62, 92; 64, 94; 66, 96; 68, 98; 70, 100; 72, 102) disposées radialement et des cames (122, 124) disposées sur un cercle, ce moteur étant en liaison d'entraînement avec les bras d'écartement (202 à 208) par l'intermédiaire d'un embrayage à friction (218, 221, 227) et d'une transmission (212, 214), en vue d'effectuer le pivotement en commun des bras d'écartement (202 à 208).

2. Appareil selon la revendication 1, caractérisé

   en ce que la transmission (212, 214) comporte une vis sans fin (216) disposée sur l'arbre d'entraînement (126) du moteur pneumatique (50), en ce que la plaque de palier (200), sur laquelle sont articulés les leviers d'écartement (202 à 208), peut être couplée, soit à l'arbre de sortie (126), soit au carter de moteur (51), et en ce que la vis sans fin (216) engrène avec des secteurs dentés (212) sur les extrémités d'articulation des bras d'écartement (202 à 208).

3. Appareil selon la revendication 1 ou 2, caractérisé

   en ce que quatre bras d'écartement (202 à 208), opposés par paires, sont articulés sur la plaque de palier (200).

4. Appareil selon la revendication 2 ou 3, caractérisé

   en ce qu'autour de l'arbre de sortie (126) du moteur (50), est disposé un disque d'embrayage (218), qui peut être couplé au carter de moteur (51) par l'intermédiaire d'une garniture de friction inférieure (221), ou à l'arbre de sortie (126) par l'intermédiaire d'une garniture de friction supérieure (227), et qui comporte sur son côté supérieur, des vis (219) guidées de manière coulissante dans des orifices de passage (225) dans la plaque de palier (200).

5. Appareil selon la revendication 4, caractérisé

   en ce que sur les vis (219) sont disposés des ressorts (222) agissant sur la plaque de palier (200), et en ce que sur la vis sans fin (216) est formé un anneau (217) qui constitue une surface de butée pour le disque d'embrayage (218).

6. Appareil selon l'une des revendications 2 à 5, caractérisé

   en ce que les dentures (212) des secteurs sont respectivement décalés les unes par rapport aux autres d'une valeur égale à 1/4 du pas de la vis sans fin (216).

7. Appareil selon l'une des revendications 2 à 6, caractérisé

   en ce que l'actionnement du disque d'embrayage (218), pour le couplage de la plaque de palier (200) au carter de moteur (51), s'effectue de manière pneumatique.

8. Appareil selon l'une des revendications 1 à 7, caractérisé

   en ce qu'aux extrémités libres des bras d'écartement (202 à 208) sont disposés des éléments en caoutchouc (220) et des griffes de serrage (226).

9. Appareil selon l'une des revendications 1 à 8, caractérisé
en ce que l'axe central du dispositif (12) pour la fixation de la jante de roue, est incliné vers l'avant en formant un angle aigu par rapport à la verticale.

10. Appareil selon l'une des revendications 1 à 9, caractérisé
en ce que sur le montant (26) du dispositif (20) destiné à repousser les rebords de talon, sont montés deux bras (250, 252) de manière à pouvoir tourner autour de l'axe vertical du montant, et en ce que sur les bras (250, 252) sont disposées des unités à piston et cylindre (276, 278) agissant sur les leviers pivotants (268, 270).

11. Appareil selon l'une des revendications 1 à 10, caractérisé
en ce que le dispositif (18) pour tirer les rebords de talon repoussés, au-dessus de la joue de la jante, comporte un bras (28, 30) articulé sur le montant (26) et à l'extrémité libre duquel est fixé l'élément destiné à venir s'appuyer sur la joue de la jante, cet élément étant un élément moulé en matière plastique (32), conçu pour venir s'engager sous le rebord de talon.

_Fig.1_

_Fig.2_

Fig.3

Fig. 5

Fig. 4

Fig.6

Fig.8

Fig. 7

Fig. 9

Fig. 11

Fig. 10

136
134
140
122
120
124
54

Fig. 12

Fig. 14

*Fig. 13*

148   XV

150

142   132   150   XIV   148

144   146

XIII

XIII

*Fig. 15*

Fig. 16

Fig. 17

Fig. 18